# EUROPEAN PATENT APPLICATION

(11) **EP 4 625 035 A1**
(43) Date of publication of application: **01.10.2025**
(21) Application number: 24166642.9
(22) Date of filing: 27.03.2024
(51) Int. Cl.: G02F 1/35, H01S 3/00

(54) **OPTICAL SOURCE**

(71) Applicant: NKT Photonics A/S, 3460 Birkerød (DK)
(72) Inventor: YARROW, Michael, Southampton, SO31 4RA (GB); CHARD, Simon, Southampton, SO31 4RA (GB)
(74) Representative: Zacco Denmark A/S

(57) **Abstract**

An optical source (100) comprising:
a seed laser (102);
spectral broadening apparatus (104) operable to broaden the seed laser signal to output a broadened laser signal;
an optical tap (106) after the spectral broadening apparatus for forming an optical tap signal; and
optical monitoring apparatus (120) comprising:
optical filter apparatus (108) configured to receive the optical tap signal and having a transmission profile configured to form an optical monitoring signal by modifying an optical power of the optical tap signal dependent on a spectral linewidth of the optical tap signal;
a photodetector (110) configured to detect the optical monitoring signal and to output a detection signal indicative of the optical power of the monitoring optical signal; and
control circuitry (112) configured to receive the detection signal and to output a said alarm signal responsive to the optical monitoring signal having an optical power indicative of a spectral linewidth indicative of a fault in the spectral broadening apparatus.

## Description

### Technical Field

The invention relates to an optical source.

### Background

Narrow linewidth, high power optical sources, such as those used for laser directed energy, typically comprise a seed laser and an optical fibre amplifier. The seed laser generates a relatively low power signal which is then amplified by the optical fibre amplifier to an output signal having an optical power of the order of kilowatts. Often, a seed laser with a particularly narrow linewidth is used. To mitigate the effects of stimulated Brillouin scattering (SBS) in the optical fibre amplifier, the linewidth of the seed laser signal is broadened. One common method to achieve linewidth broadening is the use of phase modulators driven by amplified radio frequency (RF) noise.

Optical fibre amplifiers capable of amplifying to kilowatt levels are particularly vulnerable to damage in the event of a failure of the seed laser or the linewidth broadening module. Pulsing due to SBS or a lack of seed power can cause catastrophic damage to the amplifier in a short amount of time. Therefore, it is beneficial to monitor the operation of the seed laser and the linewidth broadening module to detect any faults.

### Summary

It is an object to provide an improved optical source. It is an object to provide an optical source having improved detection of a fault in a linewidth broadening module of the optical source.

An aspect provides an optical source comprising a seed laser, spectral broadening apparatus, an optical tap and optical monitoring apparatus. The seed laser is for generating a seed laser signal having a seed laser power and a seed spectral linewidth. The spectral broadening apparatus is operable to broaden the seed laser signal to output a broadened laser signal having a second spectral linewidth, broader than the seed spectral linewidth. The optical tap is provided after the spectral broadening apparatus for forming an optical tap signal. The optical monitoring apparatus comprises optical filter apparatus, a photodetector and control circuitry. The optical filter apparatus is configured to receive the optical tap signal. The optical filter apparatus has a transmission profile configured to form an optical monitoring signal by modifying an optical power of the optical tap signal dependent on a spectral linewidth of the optical tap signal. The photodetector is configured to detect the optical monitoring signal and to output a detection signal indicative of the optical power of the monitoring optical signal. The control circuitry is configured to receive the detection signal and to output an alarm signal responsive to the optical monitoring signal having an optical power indicative of a spectral linewidth indicative of a fault in the spectral broadening apparatus.

The optical source may provide a simple, low cost, and rugged approach to monitor the performance of the spectral broadening module of an optical source, in a small and lightweight package. This may allow for the protection of downstream optical devices receiving light from the optical source from damage by preventing them from being enabled, or by preventing insufficiently or unbroadened light being delivered to them, in the event of a fault with the broadening module. For example, the optical source may provide protection of a downstream high power optical fibre amplifier from damage in the event of a fault with the broadening module.

The optical source may enable a more efficient and cost-effective solution compared to alternative methods of measuring or monitoring laser linewidth using interferometers, which can be relatively complicated, expensive, and susceptible to misalignment or sensitivity to environmental conditions.

In an embodiment, the spectral broadening apparatus comprises radio frequency, RF, drive signal apparatus and a phase modulator. The RF drive signal apparatus is operative to generate an RF drive signal having an RF signal power. The phase modulator is operative to apply phase modulation to the seed laser signal when an RF drive signal is received to form a broadened laser signal having the second spectral linewidth. The phase modulator is additionally operative to output the seed laser signal unbroadened when an RF drive signal is not received. The control circuitry is configured to output an alarm signal responsive to the optical monitoring signal having an optical power indicative of a spectral linewidth indicative of a fault in at least one of the RF drive signal apparatus or the phase modulator. This may enable automated detection of a fault in the RF drive signal apparatus or the phase modulator. This may allow for the protection of downstream optical devices receiving light from the optical source in the event of a fault in the RF drive signal apparatus or the phase modulator.

In an embodiment, the control circuitry is configured to compare the detection signal to a threshold indicative of a spectral linewidth indicative of normal operation of the spectral broadening apparatus. The control circuitry is configured to output a said alarm signal if the detection signal has a power lower than the threshold. This may allow for the protection of downstream optical devices receiving light from the optical source in the event of a fault in the spectral broadening module causing it to stop normal operation.

In an embodiment, the optical filter apparatus comprises a band-stop optical filter having an optical stop band configured to reject wavelengths corresponding to the seed optical spectrum. This may enable clear differentiation between a spectral linewidth indicative of normal operation and a spectral linewidth indicative of a fault in the spectral broadening apparatus.

In an embodiment, the band-stop optical filter is a fibre Bragg grating, FBG, having a reflection bandwidth configured to reflect wavelengths corresponding to the seed optical spectrum.

In another embodiment, the band-stop optical filter is a long-period fibre grating, LPG, having wavelength dependent loss at wavelengths corresponding to the seed optical spectrum.

In an embodiment, the optical filter apparatus comprises a reflective optical filter and an optical circulator. The reflective optical filter has a reflection spectrum having a reflection peak offset from a peak of the seed optical spectrum. The circulator is configured to route the optical tap signal to the reflective optical filter and to route the optical monitoring signal from the reflective optical filter to the photodetector.

In an embodiment, the reflective optical filter is a fibre Bragg grating, FBG, having a reflection peak offset from a peak of the seed optical spectrum. This may enable improved discrimination between a spectral linewidth indicative normal operation and a spectral linewidth indicative of a fault in the spectral broadening apparatus.

In an embodiment, the band-stop optical filter comprises an FBG and an optical circulator. The FBG includes a central phase shift such that the FBG is configured to transmit wavelengths corresponding to the seed optical spectrum and to reflect the other wavelengths of a broadened laser signal. The optical circulator is arranged to route the optical tap signal to the FBG and to route the optical monitoring signal from the FBG to the photodetector.

In an embodiment, the seed laser is a fibre laser.

In an embodiment, the seed laser is a distributed feedback, DFB, fibre laser.

Embodiments of the invention will now be described, by way of example only, with reference to the accompanying drawings.

### Brief Description of the drawings

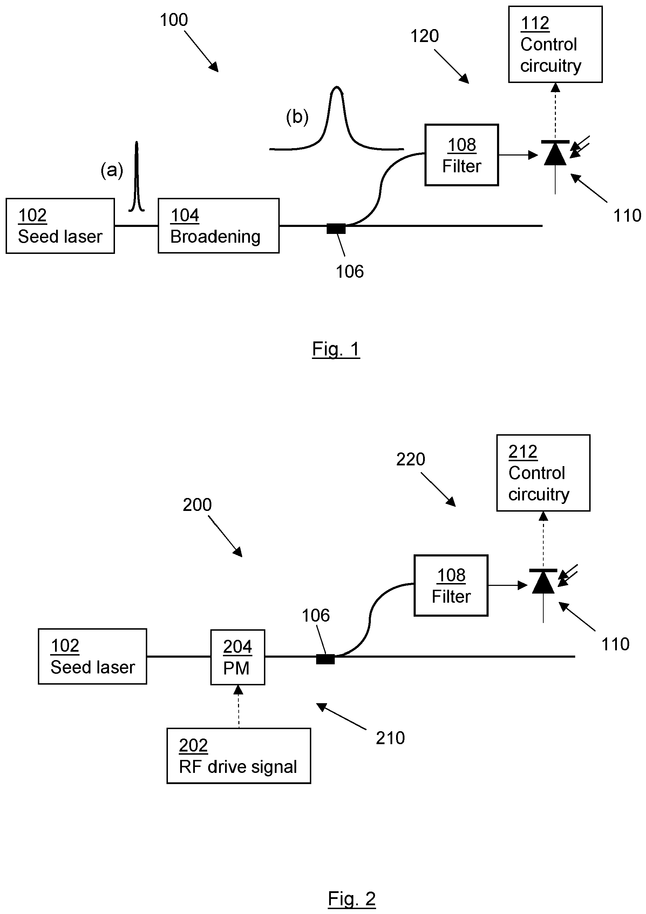

Figures 1 to 9 are schematic illustrations of optical sources according to embodiments.

### Detailed description

The same reference numbers are used for corresponding features in different embodiments.

The present disclosure relates to an optical source including a system for monitoring the linewidth of a laser signal after a spectral broadening module of the optical source. In particular, the present disclosure may provide a simple, low cost, and rugged method to monitor the performance of the spectral broadening module of an optical source, in a small and lightweight package. This may allow for the protection of high power amplifiers from damage by preventing them from being enabled, or by preventing insufficiently or unbroadened light being delivered to them, in the event of a fault with the broadening module.

More specifically, the system for monitoring the linewidth may involve tapping off a small fraction of the broadened seed laser and sending it through a narrow bandwidth filter, such as a fibre Bragg grating, FBG, or a long period grating, LPG. The power either transmitted or reflected by the filter may then be monitored using a photodiode as a measure of the linewidth of the light received from the spectral broadening module. This may offer a solution that is more efficient with a faster response, and more cost-effective, compared to alternative methods of measuring or monitoring laser linewidth using interferometers, which can be relatively complicated, expensive, and susceptible to misalignment or sensitivity to environmental conditions.

In effect, the present disclosure may provide a more efficient and cost-effective optical source including a system for protecting high power amplifiers from damage due to faults in the spectral broadening module of the optical source. This may result in a more reliable and durable high power laser source.

Referring to Figure 1, an embodiment provides an optical source 100 comprising a seed laser 102, spectral broadening apparatus 104, an optical tap 106 and optical monitoring apparatus 120.

The seed laser 102 is for generating a seed laser signal having a seed laser power and a seed spectral linewidth. The spectral broadening apparatus 104 is operable to broaden the seed laser signal to output a broadened laser signal. The broadened laser signal has a second spectral linewidth, broader than the seed spectral linewidth.

The optical tap 106 is provided after the spectral broadening apparatus for forming an optical tap signal. A majority of the broadened laser signal is transmitted towards an output and a portion is split off by the optical tap to form the optical tap signal.

The optical monitoring apparatus 120 comprises optical filter apparatus 108, a photodetector 110 and control circuitry 112. The optical filter apparatus is configured to receive the optical tap signal. The optical filter apparatus has a transmission profile configured to modify an optical power of the optical tap signal dependent on a spectral linewidth of the optical tap signal. Transmission of the optical tap signal through the optical filter apparatus modifies the optical tap signal, forming it into an optical monitoring signal.

The photodetector is configured to detect the optical monitoring signal and to output a detection signal indicative of the optical power of the monitoring optical signal. The control circuitry is configured to receive the detection signal. The control circuitry is configured to output an alarm signal responsive to the optical monitoring signal having an optical power indicative of a spectral linewidth indicative of a fault in the spectral broadening apparatus.

During normal, fault free operation, the seed laser 122 generates a seed laser signal and the spectral broadening apparatus 104 broadens the seed laser signal to output a broadened laser signal having a second spectral linewidth, broader than the seed spectral linewidth. A broadened laser signal is therefore output from the optical source.

If a fault occurs in the spectral broadening apparatus 104 which results in insufficient broadening of the seed laser signal, this will be detected by the optical monitoring apparatus 120 and an alarm signal will be output. A fault in the spectral broadening apparatus may result in the seed laser signal still being broadened but the amount of broadening not being sufficient to allow the broadened laser signal to be delivered to a downstream optical device, such as a high power fibre amplifier. A fault in the spectral broadening apparatus may alternatively result in the seed laser signal not being broadened at all, i.e. the seed laser signal is simply passed through the spectral broadening apparatus. It may be undesirable to deliver an unbroadened seed laser signal to a downstream optical device, therefore it is advantageous to output an alarm signal so that action may be taken to protect downstream optical devices receiving light from the optical source from damage. For example, an unbroadened seed laser signal should not be delivered to a high power fibre amplifier, since it may result in SBS within the optical fibre amplifier and catastrophic damage to the fibre or upstream optical components.

In an embodiment, the control circuitry 112 is configured to compare the detection signal to a threshold power level and output an alarm signal if the detection signal has a power lower than the threshold. The threshold power level is indicative of a spectral linewidth that the broadened laser signal should have during normal operation of the spectral broadening apparatus.

Figure 2 illustrates an optical source 200 according to an embodiment in which the spectral broadening apparatus 210 comprises radio frequency, RF, drive signal apparatus 202 and a phase modulator 204. The RF drive signal apparatus is operative to generate an RF drive signal having an RF signal power.

The phase modulator 204 is operative to apply phase modulation to the seed laser signal when an RF drive signal is received, to form a broadened laser signal having the second spectral linewidth. The phase modulator is additionally operative to output the seed laser signal unbroadened when an RF drive signal is not received from the RF drive signal apparatus.

The optical monitoring apparatus 220 comprises optical filter apparatus 108, a photodetector 110 and control circuitry 212. The control circuitry 212 is configured to output an alarm signal in response to the optical monitoring signal having an optical power that is indicative that the optical monitoring signal has a spectral linewidth that is indicative of a fault in the RF drive signal apparatus or the phase modulator, or both.

During normal, fault free operation, the seed laser 102 generates a seed laser signal and the phase modulator 204, driven by the RF drive signal, broadens the seed laser signal to output a broadened laser signal having a second spectral linewidth, broader than the seed spectral linewidth. A broadened laser signal is therefore output from the optical source 200.

If a fault occurs in the either the RF drive signal apparatus 202 or the phase modulator 204, insufficient broadening of the seed laser signal may be produced. This will be detected by the optical monitoring apparatus 220 and an alarm signal will be output. A fault in the RF drive signal apparatus may result insufficient RF drive signal power being delivered to the phase modulator. This may result in the seed laser signal still being broadened but the amount of broadening not being sufficient to allow the broadened laser signal to be delivered to a downstream optical device, such as a high power fibre amplifier.

A fault in the RF drive signal apparatus 202 may alternatively result in no RF drive signal being provided to the phase modulator 204, resulting in the seed laser signal not being broadened at all, i.e. the seed laser signal is simply passed through the spectral broadening apparatus. Alternatively, a fault in the phase modulator 204 may result in the seed laser signal not being broadened at all.

It may be undesirable to deliver an unbroadened seed laser signal to a downstream optical device, therefore it is advantageous to output an alarm signal so that action may be taken to protect downstream optical devices receiving light from the optical source from damage. For example, an unbroadened seed laser signal should not be delivered to a high power fibre amplifier, since it may result in SBS within the optical fibre amplifier and catastrophic damage to the fibre.

In an embodiment, the control circuitry 212 is configured to compare the detection signal to a threshold power level and output an alarm signal if the detection signal has a power lower than the threshold. The threshold power level is indicative of a spectral linewidth that the broadened laser signal should have during normal operation of the spectral broadening apparatus.

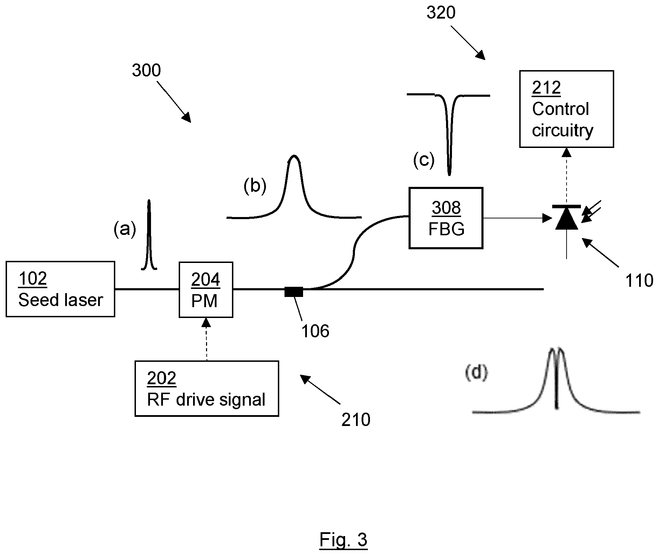

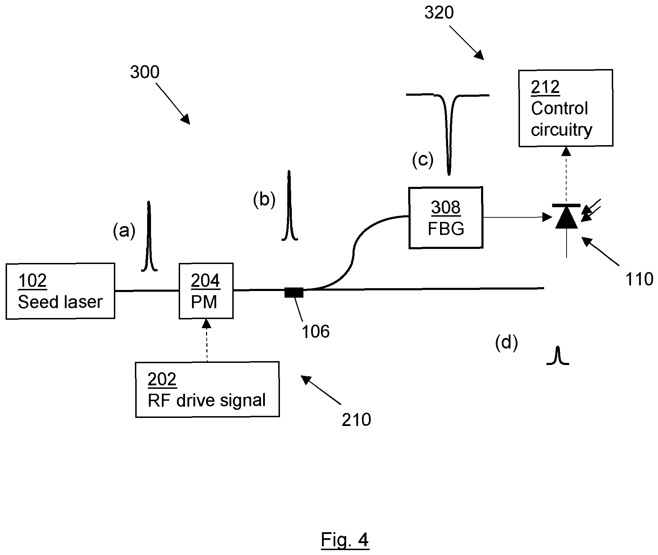

Figures 3 and 4 illustrates an optical source 300 according to an embodiment in which the optical monitoring apparatus 320 comprises optical filter apparatus 308, a photodetector 110 and control circuitry 212.

The optical filter apparatus comprises a band-stop optical filter. The band-stop optical filter has an optical stop band configured to reject wavelengths corresponding to the seed optical spectrum.

The seed laser 102 generates a seed laser signal having a seed optical spectrum, with a seed laser power and a seed spectral linewidth, illustrated in Figure 3 inset (a).

In this embodiment, the band-stop optical filter is a fibre Bragg grating, FBG, 308. The FBG has a reflection bandwidth configured to reflect wavelengths corresponding to the seed optical spectrum. The transmission profile of the FBG is illustrated in Figure 3 inset (c)
During normal, fault free operation, illustrated in Figure 3, the seed laser 102 generates a seed laser signal having a seed optical spectrum, illustrated in inset (a). The phase modulator 204, driven by the RF drive signal, broadens the seed laser signal to output a broadened laser signal having a second spectral linewidth, broader than the seed spectral linewidth; the optical spectrum of the broadened laser signal is illustrated in Figure 3 inset (b).

Transmission of the optical tap signal through the FBG modifies the optical tap signal, by removing (reflecting) light at wavelengths corresponding to the seed optical spectrum to form it into an optical monitoring signal. The optical monitoring signal therefore has an optical spectrum, illustrated in Figure 3 inset (d), which is a composite of the broadened optical spectrum and the FBG transmission profile, i.e. the broadened optical spectrum with a notch corresponding to the FBG transmission profile.

If a fault occurs in the either the RF drive signal apparatus 202 or the phase modulator 204, insufficient broadening of the seed laser signal may be produced. A fault in the RF drive signal apparatus may result insufficient RF drive signal power being delivered to the phase modulator. This may result in the seed laser signal still being broadened but the amount of broadening not being sufficient to allow the broadened laser signal to be delivered to a downstream optical device, such as a high power fibre amplifier.

A fault in the RF drive signal apparatus 202 may alternatively result in no RF drive signal being provided to the phase modulator 204, resulting in the seed laser signal not being broadened at all, i.e. the seed laser signal is simply passed through the spectral broadening apparatus. Alternatively, a fault in the phase modulator 204 may result in the seed laser signal not being broadened at all.

As illustrated in Figure 4, inset (d), if the seed laser signal is not broadened at all the optical monitoring signal will consist of only a small percentage of the unbroadened seed laser signal and will have an optical power that is indicative that the optical monitoring signal has a spectral linewidth that is indicative of a fault in the RF drive signal apparatus or the phase modulator, or both.

In an embodiment, the control circuitry 212 is configured to compare the detection signal to a threshold power level and output an alarm signal if the detection signal has a power lower than the threshold. The threshold power level is indicative that the seed laser signal has not been broadened, i.e. that there is a fault in the RF drive signal apparatus or the phase modulator, or both.

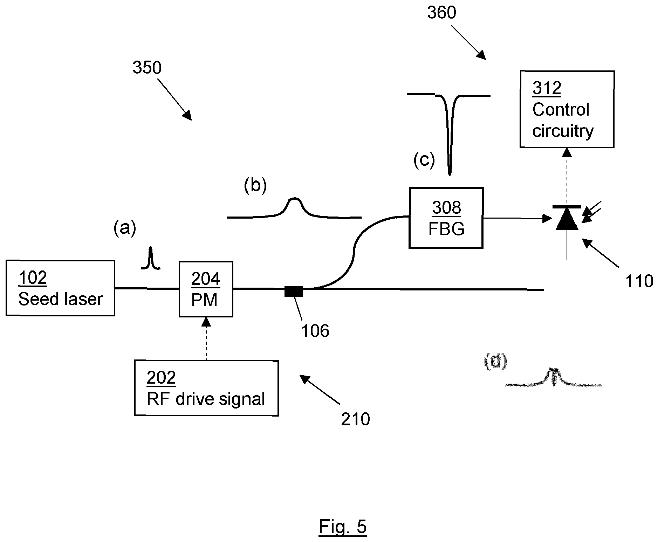

Figure 5 illustrates an optical source 350 according to an embodiment in which the optical monitoring apparatus 360 comprises optical filter apparatus 308, a photodetector 110 and control circuitry 312.

The control circuitry 312 is configured to compare the detection signal to two threshold power levels and output an alarm signal if the detection signal has a power lower than one or both thresholds.

A first threshold power level is indicative of the seed laser signal having a normal optical power level. A second, lower threshold power level is indicative of no spectral broadening.

The control circuitry 312 is configured to compare the detection signal to the first threshold power level and to the second threshold power level. If the detection signal has a power lower than the first threshold, but higher than the second power threshold, this is indicative of a drop in optical power of the seed laser. The control circuitry then outputs an alarm signal indicative of a fault in the seed laser. If the detection signal has a power lower than both the first threshold and the second power threshold, this is indicative of no spectral broadening. The control circuitry then outputs an alarm signal indicative that no spectral broadening has occurred.

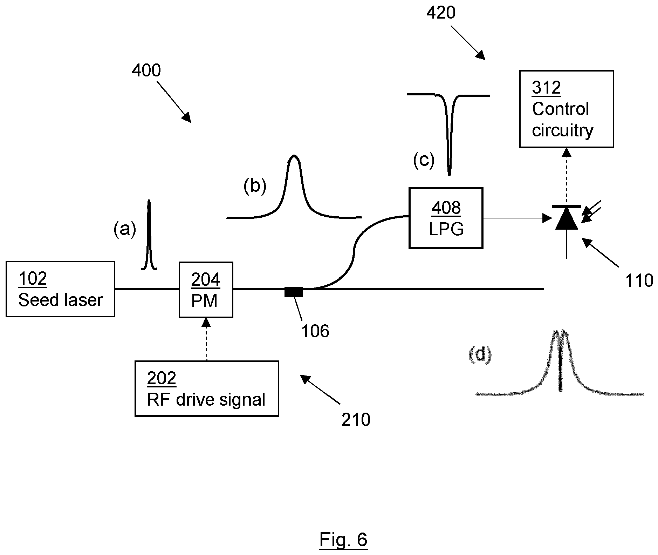

Figure 6 illustrates an optical source 400 according to an embodiment in which the optical monitoring apparatus 420 comprises optical filter apparatus 408, a photodetector 110 and control circuitry 312.

The optical filter apparatus comprises a band-stop optical filter. The band-stop optical filter has an optical stop band configured to reject wavelengths corresponding to the seed optical spectrum.

In this embodiment, the band-stop optical filter is a long period grating, LPG, 408. The LPG has wavelength dependent loss at wavelengths corresponding to the seed optical spectrum. The transmission profile of the LPG is illustrated in Figure 6 inset (c).

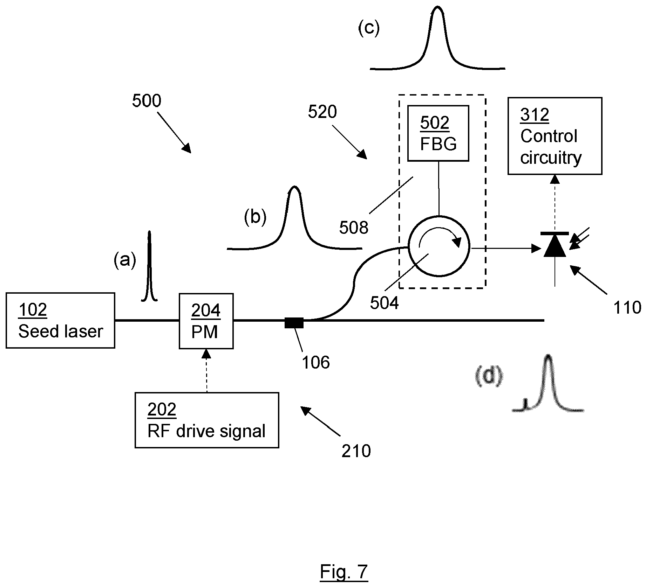

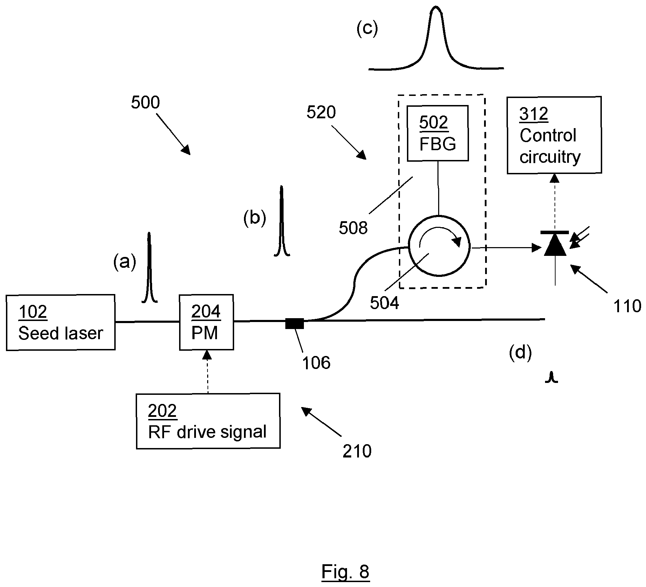

Figures 7 and 8 illustrate an optical source 500 according to an embodiment in which the optical monitoring apparatus 520 comprises optical filter apparatus 508, a photodetector 110 and control circuitry 312. The optical filter apparatus comprises a reflective optical filter 502 and an optical circulator 504.

The reflective optical filter has a reflection spectrum having a reflection peak offset from a peak of the seed optical spectrum. In this embodiment, the reflective optical filter is a fibre Bragg grating, FBG, 508 having a reflection peak offset from a peak of the seed laser signal optical spectrum. The seed laser signal optical spectrum is illustrated in inset (a), the broadened laser signal optical spectrum is illustrated in inset (b) and the reflection spectrum of the FBG is illustrated in inset (c). It will be appreciated by the skilled person that the peak of the broadened laser signal optical spectrum is at substantially the same wavelength as the peak of the seed laser signal optical spectrum.

The circulator 504 is configured to route the optical tap signal to the FBG and to route the optical monitoring signal from the FBG to the photodetector 110.

During normal operation, i.e. when the seed optical signal is broadened by the PM 204, as illustrated in Figure 7, reflection of the broadened laser signal by the FBG 502 will form an optical monitoring signal having two peaks, as shown in inset (d). The large peak corresponds to light within the broadened laser signal optical spectrum at wavelengths at the peak of the FBG reflection spectrum and the small peak corresponds to the peak of the broadened laser signal, which is at wavelengths in the low wavelength tail of the FBG reflection spectrum.

As illustrated in Figure 8, if there is a fault in the PM 204 or the RF drive signal apparatus 202 resulting in no broadening of the seed laser signal, reflection of the unbroadened seed laser signal by the FBG 502 will form an optical monitoring signal having a single, low peak, as shown in inset (d). Because the peak of the FBG reflection spectrum is offset from the peak of the seed laser signal optical spectrum, the entire seed laser optical spectrum sits in the low wavelength tail of the FBG reflection spectrum, i.e. at wavelengths where reflection by the FBG is low.

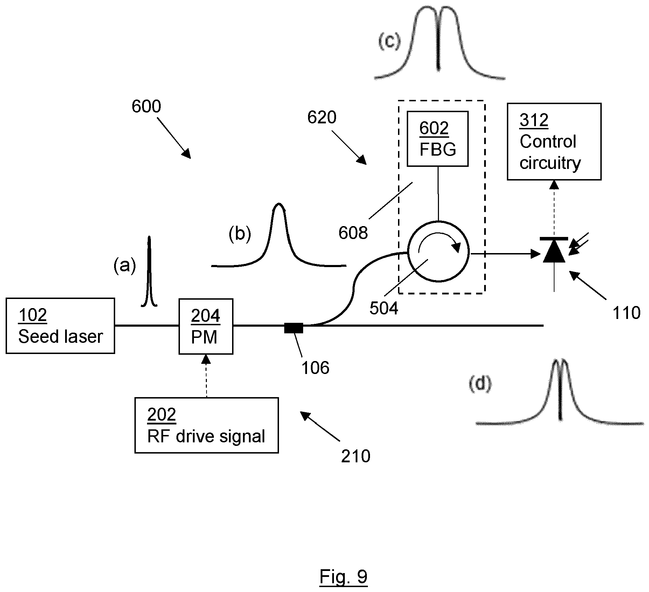

Figure 9 illustrates an optical source 600 according to an embodiment in which the optical monitoring apparatus 520 comprises a band-stop optical filter 608, a photodetector 110 and control circuitry 312.

The band-stop optical filter 608 comprises and FBG 602 and an optical circulator 504. The FBG includes a central phase shift. This means that the FBG has a reflection spectrum which has a central band-pass notch, shown in inset (c). The band-pass notch covers wavelengths corresponding to the seed optical spectrum. The FBG is thus configured to transmit wavelengths corresponding to the seed optical spectrum and to reflect the other wavelengths of a broadened laser signal. The reflected wavelengths forms the optical monitoring signal, which has a central notch corresponding to the band-pass notch of the FBG, as shown in inset (d).

The optical circulator 504 is arranged to route the optical tap signal to the FBG and to route the optical monitoring signal from the FBG to the photodetector.

In certain embodiments, the seed laser is a fibre laser, such as a distributed feedback, DFB, fibre laser.

## Claims

1. An optical source (100, 200, 300, 350, 400, 500) comprising:
a seed laser (102) for generating a seed laser signal having a seed laser power and a seed spectral linewidth;
spectral broadening apparatus (104, 210) operable to broaden the seed laser signal to output a broadened laser signal having a second spectral linewidth, broader than the seed spectral linewidth;
an optical tap (106) after the spectral broadening apparatus for forming an optical tap signal; and
optical monitoring apparatus (120, 220, 320, 360, 420, 520) comprising:
optical filter apparatus (108, 308, 408, 508) configured to receive the optical tap signal, the optical filter apparatus having a transmission profile configured to form an optical monitoring signal by modifying an optical power of the optical tap signal dependent on a spectral linewidth of the optical tap signal;
a photodetector (110) configured to detect the optical monitoring signal and to output a detection signal indicative of the optical power of the monitoring optical signal; and
control circuitry (112, 212, 312) configured to receive the detection signal and to output a said alarm signal responsive to the optical monitoring signal having an optical power indicative of a spectral linewidth indicative of a fault in the spectral broadening apparatus.

2. The optical source of claim 1, wherein the spectral broadening apparatus (210) comprises:
radio frequency, RF, drive signal apparatus (202) operative to generate an RF drive signal having an RF signal power; and
a phase modulator (204) operative to apply phase modulation to the seed laser signal when an RF drive signal is received to form a broadened laser signal having the second spectral linewidth and operative to output the seed laser signal unbroadened when an RF drive signal is not received, and
wherein the control circuitry (212) is configured to output a said alarm signal responsive to the optical monitoring signal having an optical power indicative of a spectral linewidth indicative of a fault in at least one of the RF drive signal apparatus or the phase modulator.

3. The optical source of claim 1 or claim 2, wherein the control circuitry (112, 212) is configured to:
compare the detection signal to a threshold indicative of a spectral linewidth indicative of normal operation of the spectral broadening apparatus; and
output a said alarm signal if the detection signal has a power lower than the threshold.

4. The optical source of any one of the preceding claims, wherein the optical filter apparatus comprises a band-stop optical filter (308, 408, 608) having an optical stop band configured to reject wavelengths corresponding to the seed optical spectrum.

5. The optical source of claim 4, wherein the band-stop optical filter is one of a fibre Bragg grating, FBG, (308) having a reflection bandwidth configured to reflect wavelengths corresponding to the seed optical spectrum or a long-period fibre grating, LPG, (408) having wavelength dependent loss at wavelengths corresponding to the seed optical spectrum.

6. The optical source of any one of claims 1 to 3, wherein the optical filter apparatus (508) comprises a reflective optical filter (502) and an optical circulator (504), wherein the reflective optical filter has a reflection spectrum having a reflection peak offset from a peak of the seed optical spectrum and the circulator is configured to route the optical tap signal to the reflective optical filter and to route the optical monitoring signal from the reflective optical filter to the photodetector.

7. The optical source of claim 6, wherein the reflective optical filter is a fibre Bragg grating, FBG, (508) having a reflection peak offset from a peak of the seed optical spectrum.

8. The optical source of claim 4, wherein the band-stop optical filter (608) comprises:
an FBG (602) including a central phase shift such that the FBG is configured to transmit wavelengths corresponding to the seed optical spectrum and to reflect the other wavelengths of a broadened laser signal; and
an optical circulator (504), arranged to route the optical tap signal to the FBG and to route the optical monitoring signal from the FBG to the photodetector.

9. The optical source of any one of the preceding claims, wherein the seed laser (102) is a fibre laser.

10. The optical source of claim 9, wherein the seed laser (102) is a distributed feedback, DFB, fibre laser.
